(19)

Europäisches
Patentamt
European
Patent Office
Office européen
des brevets

(11) **EP 2 161 615 B1**

(12) **EUROPEAN PATENT SPECIFICATION**

(45) Date of publication and mention
of the grant of the patent:
**04.12.2013 Bulletin 2013/49**

(51) Int Cl.:
**G02F 1/163** (2006.01)

(21) Application number: **09000003.5**

(22) Date of filing: **02.01.2009**

(54) **Process and apparatus for switching large-area electrochromic devices**

Verfahren und Apparat zum Schalten von großflächigen elektrochromen Vorrichtungen

Processus et appareil de commutation des dispositifs électrochromiques à grande surface

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **04.09.2008 EP 08015638**

(43) Date of publication of application:
**10.03.2010 Bulletin 2010/10**

(73) Proprietor: **EControl-Glas GmbH & Co. KG
93437 Furth im Wald (DE)**

(72) Inventor: **Matthews, Jeremy, Dr.
93437 Fürth im Wald (DE)**

(74) Representative: **Tönhardt, Marion
Boehmert & Boehmert
Pettenkoferstrasse 20-22
80336 München (DE)**

(56) References cited:
**EP-A- 1 517 293      US-A- 5 231 531
US-A- 5 822 107      US-B1- 6 362 806**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to a method and a system for switching a large-area electrochromic device. In particular, the invention concerns a method for switching electrochromic devices in a manner such that safe voltages are applied, while simultaneously optimising switching speed and homogeneity of optical transmission.

### Background of the invention

Electrochromic materials undergo a change in optical properties when ions and electrons are inserted into them under the influence of an electric field. An electrochromic device may be constructed from such materials, such that the visual transmittance of said device changes when a voltage is applied between two electrodes. Electrochromic devices have many applications, including switchable glazings (where transmission of heat and light is regulated according to some scheme), automotive mirrors (where mirrors switch to prevent the driver from being dazzled by glare, etc.) and in display materials (where electrochromic devices take the form of display elements to form switchable images).

The application of electrochromic materials in window glazings requires that the electrodes are of large area (> 1 $m^2$) and operate at temperatures ranging from -20 °C to +80 °C. These constraints place specific requirements on the materials available for electrochromic device construction, and affect the switching characteristics. The successful commercialisation of electrochromic devices as window glazings requires a substantial switching lifetime (> 10 years), sufficient optical transmission homogeneity and reasonable switching time (< 15 minutes); all of these factors are dependent on the switching algorithm used. The application of excessive voltages causes side reactions to occur which result in device degradation and reduction of useful lifetime. The application of inappropriately low potentials results in excessive switching times. Switching of electrochromic devices must then be carried out in a manner which satisfies the requirements outlined above.

The useful lifetime of electrochromic devices depends primarily on the magnitude of the applied voltages and on the amount of charge inserted into the electrochromic layers; the limits for these parameters may be readily determined by electrochemical experimentation. If the reversible charge injection limit for the electrochromic layers is determined, and layers are not overcharged during device switching (i.e. the reversible limits are not exceeded), it is then the applied voltage which has the greatest influence on device lifetime.

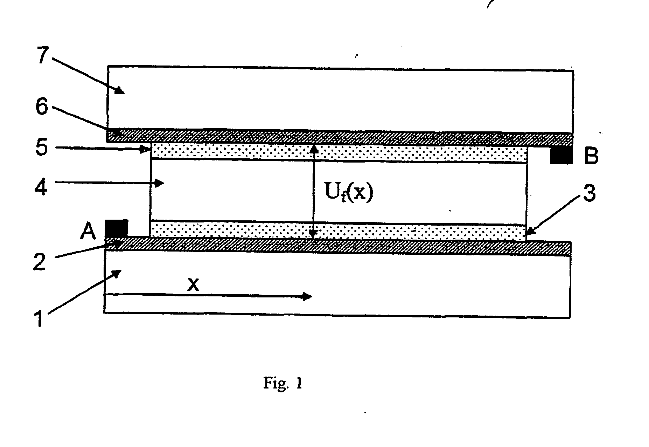

The range of voltages which may be applied between the electrode layers, without causing device degradation is often referred to as the redox stability range; the application of voltages outside this range causes device degradation thereby reducing lifetime. The redox stability range may be determined, for example, by cyclic voltammetry experiments at various temperatures. The optimisation of useful lifetime may then be made by simply limiting the electrical voltage between the electrode layers to the redox stability range for that particular system. The difficulty in applying this idea lies in the fact that the voltage is generally applied between two electrical contacts, which are on opposite sides of the electrochromic device (as shown in Figure 1).

Typical electrochromic device structures as known from the state of the art comprise substrates (usually glass), electrode layers (electrically conducting), electrochromic layers and electrolyte (polymer or inorganic). Electrical contacts to the electrode layers are provided.

When a voltage is applied between the contacts (contact voltage, $U_{AB}$), a distributed electric field is generated between the electrode layers. The resistivity of the electrode layers is relatively high compared to metallic conductors (ca. 10 - 20 Ohm/sq) which results in a significant voltage drop across each of the electrode layers. The resulting voltage difference between the electrode layers at a given point x ($U_f(x)$), is then a function of displacement of point x from the electrode contacts. If an electrochromic cell has only two contacts it is not possible to directly measure the voltage between the electrode layers $U_f(x)$. In order to ensure that the voltage between electrode layers is within the redox stability range, it is necessary to estimate $U_f(x)$ or measure it directly (in which case at least three contacts are required).

The voltage distribution described above is such that $U_f(x)$ is highest adjacent to cell contacts, and is lowest midway between the cell contacts. This causes switching (colouring and bleaching) to occur faster at the edges of the cell (near the contacts) than in the middle of the device (between the contacts); the so-called 'edge effect'. As the voltage between the electrode layers is highest at the contacted edges of the cell, it is not necessary to simulate the voltage distribution over the entire cell; it is sufficient to correlate the voltage applied to the cell contacts with the maximum voltage generated between the electrode layers ($U_{f,max}$). The applied voltage may then be limited accordingly, thereby ensuring that the maximum voltage generated between electrode layers $U_{f,max}$ remains within the safe redox limits.

Switching with high currents allows for faster response and therefore lower switching times, however results in higher inhomogeneity of transmission. The distribution of electrical voltages between the electrode layers of a cell depends inherently on the resistance of the electrode layers and the cell current. High currents cause a greater internal voltage drop across the electrode layers, which results in a less homogeneous voltage distribution. In order to switch

## EP 2 161 615 B1

electrochromic devices with more homogeneous optical transmission, it is then useful to limit the cell current, however switching time becomes unacceptably long if current is too low. Fast switching and homogeneous switching are then mutually competitive aims, and a balance must be found between the two in order to optimise switching characteristics. It is then inherently necessary to be able to control cell current in order to switch cells with reasonable speeds and transmission homogeneity.

WO9837453 describes a method for switching electrochromic devices, according to which the preamble of the patent claim is formulated. This method involves switching an electrochromic device by applying a voltage ramp from zero volts up to a predetermined temperature-dependent limit $'U_{max}'$. The current is continuously measured during the voltage ramp, and the total resistance of the cell $'R_{ges}'$ is calculated from the voltage and current data. The effective voltage at the electrochromic layers $'U_{eff}'$ is calculated from the applied voltage, the cell current and the total resistance ($'R_{ges}'$). The voltage is applied such that $'U_{max}'$ and $'U_{eff}'$ are limited to temperature-dependent predetermined limits, until the desired optical/charge state is obtained.

This method has the following disadvantages:

1. The application of the voltage according to this method relies on the total cell resistance ($'R_{ges}'$), which is described as the sum of all of the ohmic resistances, between the cell contacts. The method theorises that this resistance may be used to ensure that safe electrochemical voltage limits are not exceeded, during switching. The total cell resistance includes series resistances from cables, electrode layers, electrochromic layers and electrolyte. However, it has been experimentally shown that this theory does not work in practise, and the use of the resistance $'R_{ges}'$ in controlling the switching of electrochromic devices results in the application of voltages significantly exceeding safe electrochemical limits.

2. The method involves the calculation of the effective voltage at the electrochromic layers $'U_{eff}'$, which does not correspond to a discrete physical quantity. It is assumed that limiting the applied voltage according to $'U_{eff}'$, will prevent degradation from occurring. In actual fact, limiting the applied voltage according to $'U_{eff}'$, results in voltages between the electrode layers which significantly exceed safe redox stability limits.

3. The method does not allow for optimisation of transmission homogeneity or switching speed as current is not controlled.

4. The method only allows for switching between completely coloured and bleached states.

EP 0 475 847 B1 describes a method for switching an electrochromic device by first applying a small voltage pulse, during which time the current is measured and used to estimate temperature and hence select an appropriate final switching voltage. The switching is carried out under constant voltage until either the current density reaches some predetermined threshold limit, the charge density reaches 10 mC/cm$^2$ or the desired transmission level is reached. This method also provides provisions for switching of an electrochromic device with three electrodes, whereby a voltage difference is applied to two electrode contacts (contacts 1 and 2), such that the voltage difference between contacts 2 and 3 remains constant.

This method does not allow for optimisation of transmission homogeneity or switching speed as current is not controlled. The use of electrochromic devices with three contacts allows the voltage between the electrochromic layers to be accurately and safely controlled, provided that safe redox limits are not exceeded. Such devices are disadvantageous however, because the production process is unduly complicated as substrates must be cut to size and masked before coating (to allow for the third contact), thereby increasing production time and financial cost.

EP 0 718 667 A1 describes a system for switching electrochromic devices with two contacts, using a controller unit with user-interface, a power generator, temperature sensor, etc. This patent details methods for switching using either constant voltage or constant current, with specific conditions and safety criteria provided for each method. The constant voltage method involves application of a predetermined temperature-dependent voltage to the cell until either the required charge density is reached or the current drops below some threshold value. The constant current method involves application of the current until either the required charge density is reached or the current drops below some threshold value. The second differential of voltage with respect to time is calculated continuously, and the current set point is reduced (halved) if this exceeds some predetermined limit.

This method has the disadvantage that it limits either cell current or voltage, and not both. The constant current operation described in this method may be used to optimise switching speed and transmission homogeneity, however does not ensure that the voltages between electrode layers are within the safe redox limits. The voltage generated between the electrode layers may be monitored using a 3-electrode system, however this increases complexity and expense. The reduction in applied current by 50 % based on the second differential of voltage with respect to time is a novel solution, however does not guarantee that safe redox limits will not be exceeded. The constant voltage method

3

does not allow for control of the cell current, hence cannot allow for optimisation of switching speed and transmission homogeneity simultaneously.

US 7 277 215 B2 describes a system for switching electrochromic devices with three electrode contacts. Two of the electrodes are used for cell switching and the other two are used for heating and/or breakage detection. The microcontroller uses a variety of AC/DC techniques to colour and bleach the device, measure temperature, heat the device and detect mechanical breakage of the pane. The controller uses an internal circuit which is matched to external conditions in order to calculate leakage current and adjust switching parameters accordingly. This system is extremely complicated and requires that the internal circuitry of the controller be well matched to the specific properties of the EC device. The disclosed system offers a novel solution to the problems concerned with leakage current in EC devices with inorganic ion conductors, however is unduly complex for systems with organic ionic conductors.

EP 1 517 293 A1 describes a process for switching an electrochromic device by dynamically applying a voltage which includes compensation for resistances of the transparent conducting oxide layers and for the electrolyte. The electrolyte resistance is determined by applying a short voltage pulse and by measuring the current, wherein the resistance is then calculated from Ohm's law.

Despite these advances, there remains a need for a switching method for electrochromic devices which:

> 1. ensures that the potential between the electrode layers is always between safe redox limits, even for devices with two electrode contacts;

> 2. allows for optimisation of switching speed and transmission homogeneity, via limitation of the applied cell current.

**Summary of the invention**

The present invention solves the problems identified in the prior art as described above. The object of the present invention is to provide a method of switching an electrochromic device which ensures that the voltages between film electrodes are always between safe redox limits, while simultaneously allowing optimisation of transmission homogeneity and switching speed by limiting cell current.

In order to switch an electrochromic device in a safe fashion, it is crucial that the voltage applied between the electrodes does not exceed the safe redox limits. These limits may be predetermined from electrochemical studies, for example cyclic voltammetry. Unfortunately, it is not normally possible to measure the voltage between the electrode layers directly, because the two electrode contacts are on opposite sides of the cell. It is then only possible to directly measure the applied contact voltage $U_C$ and estimate the voltage between the electrode layers. The voltage between the electrode layers varies significantly over the area of the cell depending on the distance from the two electrode contacts, however the largest potential difference between electrode layers always occurs at the edges of the cell, adjacent to the electrode contacts. It is then not necessary to know the complete voltage distribution of the cell under a given set of conditions; it is sufficient to know the maximum voltage between the electrode layers and ensure that this is within safe electrochemical limits, in order to switch a device in a safe manner, thereby ensuring maximum lifetime.

It was found that the relationship between the applied contact voltage and the maximum voltage generated between the electrode layers may be described by a simple equation, involving cell current and a constant resistance. This resistance is only dependent on cell width and height and on material properties of the electrode layer. This resistance is almost independent of temperature, hence is unaffected by electrolyte conductivity. This is advantageous, because it is not necessary to know the electrolyte conductivity in order to ensure that safe voltages are generated between the electrode layers.

The voltage applied to the cell contacts is distributed across the electrode layers due to the resistive nature of the electrode layers (see background of the invention). It can however be shown that the maximum voltage generated between the electrode layers $U_{f,max}$ (i.e. occurring at the cell edges adjacent to the electrode contacts) can be calculated using the formula:

$$U_{f,\mathrm{max}} = U_C - i_C R_{Eff}, \qquad \textbf{Equation 1}$$

where $U_c$ is the potential applied to the cell contacts, $i_C$ is the cell current and $R_{Eff}$ is the effective resistance (Ohms) of the cell. The effective resistance $R_{Eff}$ may be calculated from cell dimensions as follows:

$$R_{Eff} = \left(\frac{w}{h}\right) \times k, \qquad \textbf{Equation 2}$$

where w and h are cell width and height in centimetres, where the height corresponds to the length of the contacted cell edges. *k* is a constant which is representative of the material used for the electrode layer in electrochromic devices (independent of device dimensions). The effective resistance is a constant which relates the voltage applied to the cell contacts $U_C$, to the maximum voltage generated between the electrode layers $U_{f,max}$. The effective resistance is a function of cell dimensions and needs only be calculated once, preferably before the start of the switching process. The calculation of a single value for effective resistance requires only that the width and height of the device, as well as the material constant k are known, and provides a concrete link between the applied cell contact voltage and the maximum voltage between the electrode layers.

The maximum voltage between the electrode layers can not be controlled directly, as only the voltage applied to the cell contacts can be controlled. It is however possible to indirectly limit the voltage between the electrode layers, by limiting the cell contact voltage ($U_C$) appropriately. If the safe redox limit $U_{EC}$ is predetermined for a given switching process (coloration or bleaching), then the applied contact voltage can be limited appropriately using the following calculation:

$$U_{C,\text{max}} = U_{EC} + i_C R_{Eff} \qquad \textbf{Equation 3}$$

If the voltage applied at the cell contacts $U_C$ is maintained below the maximum limit $U_{C,max}$, then it is indirectly ensured that the maximum voltage between the electrode layers $U_{f,max}$ does not exceed its corresponding safe redox limit $U_{EC}$.

According to the invention, provision is made for the cell voltage $U_C$ and current '$i_C$' flowing through the device to be measured continuously. Electrical voltage is applied to the contacts of the device in the form of a stepped ramp, starting at a fixed voltage and increased in predetermined voltage increments, $U_{step}$ (10 - 100 mV) until specific conditions are fulfilled. The stepped voltage ramp is applied in such a way as to ensure that two criteria are fulfilled:

1. Maximum voltage between electrode layers $U_{EC,max}$ does not exceed the temperature-dependent safe electrochemical limit $U_{EC}$;
2. Cell current does not exceed the predetermined (temperature-dependent) limit $i_{max}$.

According to the invention, the applied voltage is only increased if the cell current is less than a maximum cell current $i_{max}$, determined according to

$$i_{\text{max}} = j_{\text{max}} \times Area + (T - T_0) \times F$$

where $j_{max}$ is a predetermined maximum current density, *Area* is the active cell area, T is the temperature of the electrochromic element, and $T_0$ is a reference temperature, thereby the factor F allowing for modification of the current according to temperature, thereby allowing modification of switching speed with respect to temperature.

The use of a constant electrical voltage in this method allows electrochromic devices to be switched with voltages which are always maintained within the safe redox limits. The use of a current limit allows the switching speed and transmission homogeneity to be optimised. This process may be divided into several stages which may best be described by referring to the associated drawings.

**Brief Description of the Drawings**

Figure 1 shows a cross-sectional view of an electrochromic device according to the invention.

Figure 2 shows a block diagram for a controller unit, showing measurement and control parameters required for switching of an electrochromic device according to the invention.

Figure 3 shows a flow diagram for the switching algorithm defined by the invention.

Figure 4 shows a graph illustrating the switching characteristics (voltage, current and charge density) during coloration and bleaching of an electrochromic device according to the invention.

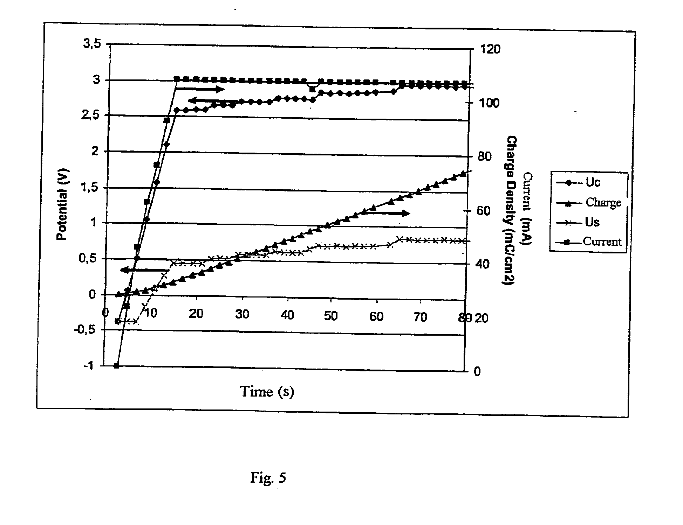

Figure 5 shows the same graph as in Figure 4, rescaled however to show only the first 80 seconds of coloration.

## Detailed Description of the invention

Figure 1 shows a cross-sectional view of a typical electrochromic device. A glass substrate 1 is coated with a first electrode layer 2, on which is coated a first layer 3 in which ions may be reversibly inserted. The first layer 3 in which ions may be reversibly inserted is electrochromic in nature. An ion-conducting layer 4 separates the first layer in which ions may be reversibly inserted, from the second layer 5 in which ions may be reversibly inserted. The ion-conducting layer 4 may be an organic polymer, however is not restricted to such materials. The second layer 5 in which ions may be reversibly inserted acts as a counter electrode to the first layer 3 in which ions may be reversibly inserted, and may or may not be electrochromic in nature. The layered structure of the device is completed by a second glass substrate 7 which is coated with a second electrode layer 6. The electrode layers 2, 6, are provided with electrical contacts (A and B) between which an electrical voltage may be applied.

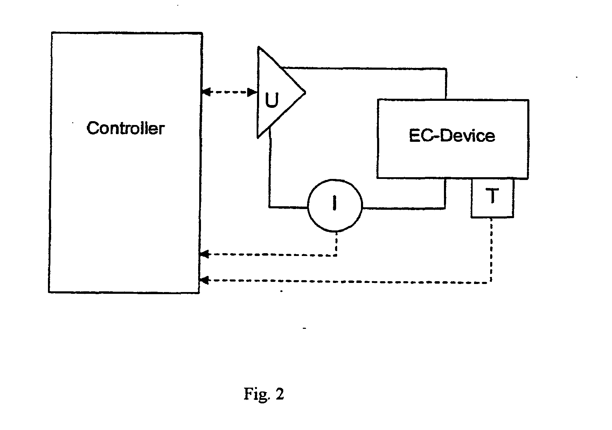

Figure 2 shows a simplified block diagram of the hardware required for switching of an electrochromic device according to the invention. A voltage is generated by a suitable voltage source (U), and may be applied to cell contacts A and B by switching suitable relays. The voltage source may also include a means for measuring the applied voltage, the measured values then being sent back to a controller for analysis. Provision is made for the cell current to be continuously measured by the use of a suitable ammeter, the measured values being sent to the controller on a cyclic basis. Measurement of the temperature of the electrochromic device is provided for by the use of a temperature sensor, which may be incorporated into the structure of the electrochromic device. The magnitude of the electrical voltage to be applied to the cell contacts is calculated by the controller based on values of temperature, electrochemical voltage limits (safe redox limits) and cell current. The controller controls the entire switching process based on the use of a specific algorithm which is detailed below. The controller is therefore able to perform calculations according to the switching algorithm described below, preferably using a microprocessor for software control. The controller software also allows for calculation of charge density, by integration of measured current with respect to time. Such a controller has been previously described in WO0067070.

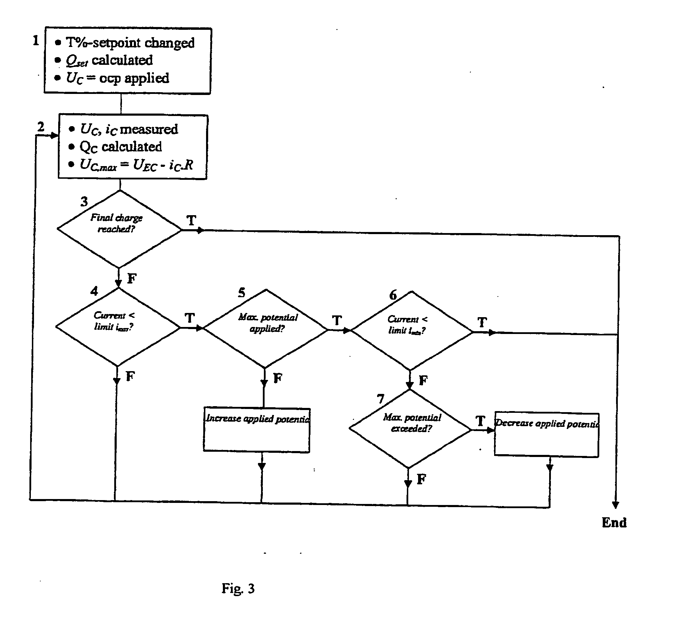

The switching of the electrochromic device (modification of device transmission) is performed by controlling the electrical voltage applied to contacts A and B according to a specific algorithm, as detailed in Figure 3. The electrical voltage applied to the contacts of the electrochromic device during switching is limited such that two conditions are satisfied:

I. The maximum voltage generated between the electrode layers ($U_{f,max}$) does not exceed the temperature dependent safe redox limit ($U_{EC}$).
II. The applied electrical voltage is increased in a stepwise fashion, only when the measured cell current is below a predetermined temperature-dependent limit.

The switching algorithm according to the invention is described below with the aid of references to Figure 3. Various parameters corresponding to the electrochromic device must be saved in the memory of the controller before the switching process may be started. Necessary parameters include:

•    Height and width of the electrochromic device;

•    Resistance constant for electrode layers;

•    Safe electrochemical limits ($U_{EC}$) for coloration and bleaching processes;

•    Maximum current limit (calculated according to switching time/transmission homogeneity considerations);

•    Voltage step size ($U_{step}$);

- Minimum current ($i_{min}$);

1. A switching process (coloration or bleaching) is started when the transmission set-point is changed. This action may be performed by a user interaction (e.g. by pressing a button on the controller) or by a remote control system (e.g. via software command from a control computer). The charge density ($Q_{set}$) corresponding to the desired transmission set-point is preferably determined either by direct calculation or by interpolation from a lookup table. The desired charge density is compared with the actual charge density, and the step designated as coloration or bleaching accordingly. The open circuit voltage of the electrochromic device is measured, and this voltage is then applied to the cell contacts.

2. The cell voltage and current are measured and the charge density is calculated from current-time data (or measured directly with integrator electronics). The maximum safe cell voltage $U_{C,max}$ is calculated from Equation 3 as stated above.

3. Charge-limiting condition: Switching may continue only until the desired charge density is reached. The controller compares the current charge density with the desired charge density ($Q_{ser}$), and forces termination of the switching process when the desired charge density has been reached.

4. Current-limiting condition 1: The applied voltage may only be increased if the cell current is less than the maximum cell current ($i_{max}$), determined according to the equation $i_{max} = j_{max} \times Area + (T-T_0) \times F$, where $j_{max}$ is a predetermined maximum current density, *Area* is the active cell area, $T$ is the temperature of the electrochromic element, and $T_0$ is a reference temperature, thereby the factor F allowing for modification of the current according to temperature, thereby allowing modification of switching speed with respect to temperature. The controller compares the measured current with the maximum current limit; the applied voltage may only be increased if the cell current is below the maximum limit. If the cell current is above the maximum current limit, the process returns to step 2 above. The cell current decreases rapidly under constant voltage, thereby only allowing the cell current to exceed the limit $i_{max}$ for a short time and by a small amount (typically a few milliamperes).

5. Voltage-limiting condition 1: The algorithm ensures that the voltage between the film electrodes does not exceed the safe electrochemical limit, by limiting the applied cell contact voltage $U_C$ to the maximum safe limit $U_{C,max}$ determined using Equation 3 in step 2 above. If the maximum safe voltage limit $U_{C,max}$ has not yet been reached, then the applied cell voltage is increased by the predetermined voltage step $U_{step}$ and step 2 follows;

$$\text{i.e. } U_{C,f} = U_{C,i} + U_{step},$$

where $U_{C,f}$ and $U_{C,i}$ are final and initial voltages respectively. If the maximum safe voltage limit $U_{C,max}$ has been reached, then the process continues to the next step (Current-limiting condition 2, step 6)

6. Current-limiting condition 2: The switching process is allowed to continue until the predetermined minimum cell current ($i_{min}$) is reached. Cell current is proportional to switching speed; hence this condition terminates the switching process once the speed of the process falls below some acceptable limit. This limit may be defined as an absolute current in milliamperes, or more conveniently as a percentage of the maximum cell current $i_{max}$.

7. Voltage-limiting condition 2: This condition occurs only when the maximum voltage has already been reached; switching is then taking place under constant voltage $U_C$ and current is decreasing. The decreasing current causes a decrease in the maximum safe voltage limit $U_{C,max}$, according to Equation 3 above. The applied cell voltage may then ultimately exceed the maximum safe limit as current decreases; in this case the applied voltage is reduced by the predetermined voltage step $U_{step}$ and step 2 follows;

$$\text{i.e. } U_{C,f} = U_{C,i} - U_{step},$$

where $U_{C,f}$ and $U_{C,i}$ are final and initial voltages respectively. If the maximum safe voltage limit $U_{C,max}$ has not been reached, then the process returns to step 2.

The switching process is terminated when either the desired current density is obtained, or when the minimum current limit is reached. This procedure is generally identical for either coloration or bleaching, however the appropriate safe voltage limits must be applied according to switching direction (coloration or bleaching). To ensure complete bleaching, the maximum safe contact voltage $U_{C,max}$ may be applied for a longer time period after the minimum current has been reached; this is advantageous in the case where cell currents are low, such as for small-area electrochromic devices, especially operating at low temperature, in particular where the resolution of current measurement lies close to the minimum current limit. In such cases, it is useful to increase the bleaching time according to the following equation:

$$\Delta t_{Bl} = \left(T_{\lim} - T\right) \times F,$$

where $\Delta t_{Bl}$ is additional bleaching time, and corresponds to an extension of the bleaching time after the minimum current density has been reached. $T$ is the device temperature and $T_{lim}$ is the limiting (maximum) temperature, for which the bleaching process should be extended. Z is an appropriate factor which designates how long the bleaching process should be extended, for every degree Celsius below the limiting temperature. As an example, consider an electrochromic device bleaching at 5 °C whereby limiting temperature $T_{lim}$ and temperature factor Z have values of 10 °C and 30 s/°C respectively. The current flowing during bleaching of the device will be relatively low as ion-transport is slow at low temperature, hence the calculated minimum current limit may fall below the resolution of the current measurement device. In this case, the bleaching process is allowed to occur until the minimum current limit is reached, and the bleaching time extension is calculated according to:

$$\Delta t_{Bl} = \left(T_{lim} - T\right) \times Z = \left(10 - 5\right) \times 30 = 150s.$$

The maximum safe contact voltage $U_{C,max}$ is then applied for a further 150s after the minimum current has been reached, thereby ensuring that the device is bleached completely, regardless of temperature or resolution of the current measurement. At the end of the bleaching process, the charge counter is reset to zero which then corrects any errors with charge measurement during the extended bleaching process, which may be caused by resolution of the current measurement.

**Examples**

The invention will be further explained using as example the switching of a 40 x 80 cm$^2$ electrochromic device, from a completely bleached to coloured state. Before switching begins, the relevant parameters are saved in the memory of the controller. The relevant parameters are as follows:

    1. Electrochromic device height (length of contacted edges) = 40 cm

    2. Electrochromic device width (length of non-contacted edges) = 80 cm

    3. Resistance constant for electrode layers ($k$) = 10 Ohm

    4. Maximum current density ($j_{max}$) = 33,3 $\mu$A/cm$^2$, as calculated according

$$j_{\max} = \left(\frac{Q_{\max}}{Time}\right) = \frac{20}{600s}\frac{mC}{cm^2} = 33,3\frac{\mu A}{cm^2},$$

where ($Q_{max}$) is the maximum charge density corresponding to the completely coloured state and (*Time*) is the desired switching time.

    5. The maximum current ($i_{max}$) is calculated according to

$$i_{\max} = (j_{max} \times Area) + (T - T_0) \times F = \left(33,3 \ \frac{\mu A}{cm^2} \times 3200 \ cm^2\right) + (T - T_0) \times F = 107 \ mA \ ,$$

assuming $F=0$ in this example, for sake of simplicity.

6. Safe coloration voltage limit ($U_{ec, col}$) = +3,00 V at 0 °C

7. Effective resistance of the electrochromic device, as calculated using Equation 2:

$$R_{Eff} = \left(\frac{w}{h}\right) \times k = \left(\frac{40}{80}\right) \times 10 = 20\Omega$$

8. Voltage step ($U_{step}$) = 20 mV.

9. Safe bleaching voltage limit = -2,90 V at 0 °C.

10. Minimum current limit = 10 % of maximum current.

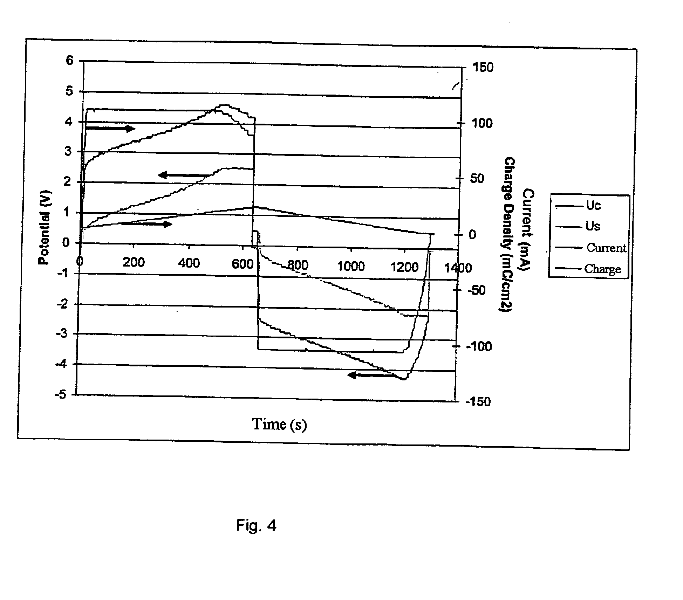

The following conventions will be used in this example for the sake of clarity. Coloration is effected by increasing the cell voltage in a positive direction, an associated positive current flows and there is a corresponding increase in charge density. Decreasing the voltage (in a negative direction) then causes bleaching to occur, and a negative current to flow, and a decrease in charge density results. The fully bleached and coloured states correspond to charge densities of 0 and 20 mC/cm$^2$ respectively. Figure 4 shows the switching characteristics for this example, according to the invention.

When the switching command is received (from user or as remote command), the controller calculates the charge density corresponding to the desired transmission state. If the user selects the completely coloured state, then the desired charge density is 20 mC/cm$^2$ in this example. The controller then compares the momentary charge density (0 mC/cm$^2$, fully bleached) with the desired charge density (20 mC/cm$^2$, fully coloured) and designates the switching step as coloration.

The open circuit voltage (*ocp*) of the electrochromic device is then measured (voltage by zero current) and the controller then causes the voltage source to output the cell contact voltage ($U_C$), equal to the measured cell *ocp*. In the case of this example, the *ocp* was -0,382 V.

The controller then reads the temperature of the electrochromic device from the temperature sensor (45°C in this example) and calculates the safe electrochemical limit for coloration according to:

$$U_{EC} = a + bT = 3,0V - 0,01 \ \frac{V}{°C} \times 45°C = 2,55 \ V \ ,$$

where *T* is the temperature of the electrochromic element and *a* and *b* are constants related to electrochromic device design.

The initial current is 0 mA (after application of *ocp* to cell contacts) and $U_{C,max}$ is then calculated by the controller according to

$$U_{C,\max} = U_{EC} + i_C R_{Eff} = 2,55 \ V + (0 \ A \times 10 \ \Omega) = 2,55 \ V$$

As the initial contact voltage is lower than the calculated maximum contact voltage, and the current is lower then the calculated maximum current, the contact voltage is then increased, using the equation

$$U_{C,f} = U_{C,i} + U_{step} = -0,382 \ V + 0,02 \ V = -0,362 \ V$$

The applied contact voltage is then initially increased in a stepwise fashion (repeating Steps 2 to 4 in Figure 2), until the maximum current is reached, until the maximum voltage limit is applied or until the desired charge density is obtained. If the desired charge density is obtained, then the controller terminates the switching process and disconnects the electrochromic device from the voltage source. If the maximum current is reached, the voltage remains constant until the current decays below the maximum limit $i_{max}$. The applied voltage is then increased in this stepwise fashion, until the maximum potential limit $U_{C,max}$ is reached.

In the example shown in Figures 3 and 4, the applied cell voltage is increased in steps of 20 mV until the cell current limit of 107 mA is reached, after about 15 seconds. The applied cell contact voltage current at this time is 2,58 V, however the maximum voltage generated between the electrode is only 0,44 V. This is calculated according to the equation:

$$U_{f,\max} = U_c - i_C R_{Eff}$$

The cell current is then held approximately constant, by only increasing the cell contact voltage when the current falls below 107 mA. During this time, the maximum cell contact voltage $U_{C,max}$ is continuously calculated by the controller according to

$$U_{C,\max} = U_{EC} + i_C R_{Eff} = 2,55 \ V + \left(0,107 \ A \times 20 \ \Omega\right) = 4,69V$$

The cell contact voltage $U_C$ is then increased in 20 mV steps according to

$$U_{C,f} = U_{C,i} + U_{step} \ ;$$

until approximately 510 seconds have passed, at which time the maximum voltage limit $U_{C,max}$ is reached.

Once the maximum voltage limit $U_{C,max}$ is reached, the applied cell voltage is held constant and current decreases as the electrochromic reaction slows. The maximum voltage limit $U_{C,max}$ is recalculated on a cyclic basis (several times per second) and reduces as the cell current decreases. It is then possible that the cell contact voltage $U_C$ will exceed the maximum voltage limit $U_{C,max}$ during the end of coloration or bleaching; in this case the applied contact voltage must be reduced in a stepwise fashion according to

$$U_{C,f} = U_{C,i} - U_{step}$$

The switching process is terminated by the controller when the desired charge density is obtained, in this case 20 mC/cm$^2$.

In example shown in Figure 4, the cell current decays under the constant voltage from about 510 seconds, and the applied cell contact voltage is appropriately reduced, effectively maintaining the maximum voltage between the electrode layers $U_{f,max}$ at its constant temperature dependent limit of 2,55 V. The desired charge density of 20 mC/cm$^2$ is reached after a total coloration time of 632 s, at which time the electrochromic device is electrically disconnected from the voltage source. After a pause of 20 seconds, the electrochromic device is bleached in a similar fashion to the coloration process described above, as follows:

1. The temperature of the electrochromic device is read by the controller, at 45 °C.

2. The safe electrochemical limit for bleaching is calculated by the controller according to:

$$U_{EC} = A + BT = -2{,}9\ V + 0{,}01\frac{V}{{}^{\circ}C} \times 45\ {}^{\circ}C = -2{,}45\ V$$

3. The open circuit potential is measured at 0,950 V.

4. A voltage of 0,950 V is applied to contacts of the electrochromic device.

5. The cell contact voltage is decreased in steps of 20 mV (i.e. potential stepped in negative direction), until the maximum current limit of -107 mA is reached.

6. The maximum cell contact voltage $U_{C,max}$ is continuously calculated by the controller according to:

$$U_{C,\mathrm{max}} = U_{EC} + i_C R_{Eff} = -2{,}45\ V + \left(-0{,}107\ A \times 20\ \Omega\right) = -4{,}59\ V.$$

7. The cell contact voltage is then decreased only when the magnitude of the cell current falls below 107 mA, until the maximum voltage limit $U_{C,max}$ (-4,59 V, in this case negative in magnitude for bleaching) is reached.

8. The magnitude of the applied contact voltage is then reduced in a stepwise fashion according to:

$$U_{C,f} = U_{C,i} - U_{step};$$

as the bleaching cell current decreased.

9. The switching process is terminated by the controller when the minimum current limit of 10,7 mA (10 % x 107 mA) is reached. The final charge density is 0,1 mC/cm$^2$, and the charge counter is then set to 0 mC/cm$^2$, and the electrochromic device electronically is disconnected from the voltage source.

**Claims**

1. Process for switching an electrochromic cell comprising at least the following components:

    a first electrode layer (2) provided with a first electrical cell contact (A) and a second electrode layer (6) provided with a second electrical cell contact (B);
    a first and a second layer (3, 5), in which ions may be reversibly inserted, the first layer (3) being coated on the first electrode layer (2), and the second layer (5) being coated on the second electrode layer (6); and
    an ion-conducting layer (4) that separates the first and the second layer (3, 5) in which ions may be reversibly inserted;
    where at least the first layer (3), in which ions may be reversibly inserted, is electrochromic; and
    where the first and the second layer (3, 5), in which ions may be reversibly inserted, are counter electrodes to each other;
    the process comprising the steps of:

        measuring continuously the current $i_C$ flowing through the cell if a voltage is applied to the electrode layers (2, 6); and
        applying a voltage $U_c$ to contacts (A, B) and varying the applied voltage as a function of current, such that the voltage $U_f$ generated between the electrode layers (2, 6) is kept within predetermined temperature-dependent safe redox limits, so that the cell current is limited to predetermined temperature-dependent limits,
        **characterised in that**
        the applied voltage is only increased in a stepwise fashion if the cell current is less than a maximum cell current $i_{max}$, determined according to

$$i_{max} = j_{max} \times Area + (T - T_0) \times F,$$

where $j_{max}$ is a predetermined maximum current density, *Area* is the active cell area, T is the temperature of the electrochromic element, and $T_0$ is a reference temperature, thereby the factor F allowing for modification of the current according to temperature , thereby allowing modification of switching speed with respect to temperature.

2.  Process in accordance with claim 1, **characterised in that** the temperature dependence of the safe redox limits $U_{EC}$ is calculated according to the equation:

$$U_{EC} = a + bT,$$

where *T* is the temperature of the electrochromic element and *a* and *b* are constants related to electrochromic device design.

3.  Process in accordance with claim 1, **characterised in that** the maximum current density $j_{max}$ is calculated from the desired switching time, according to the equation

$$j_{max} = \left( \frac{Q_{max}}{Time} \right),$$

where $Q_{max}$ is the maximum charge density corresponding to the completely coloured state and *Time* is the desired switching time.

4.  Process in accordance with claim 1, **characterised in that** the effective resistance $R_{Eff}$ of the electrochromic cell is calculated from cell dimensions and at least one material constant before starting the switching process.

5.  Process in accordance with claim 4, **characterised in that** the effective resistance $R_{Eff}$ of the electrochromic cell is calculated from cell width (w), where width (w) refers to a separation between electrode contact strips of the cell contacts (A, B), height (h), where height (h) corresponds to a length of contacted edges of the cell contacts (A, B), and at least one material constant (k), according to the equation

$$R_{Eff} = \left( \frac{w}{h} \right) \times k.$$

6.  Process in accordance with claim 5, **characterised in that** the maximum voltage $U_{f,max}$ generated between the electrode layers is calculated from the applied contact voltage $U_C$, the cell current $i_C$, and the effective resistance $R_{Eff}$ of the electrochromic cell.

7.  Process in accordance with claim 6, **characterised in that** the maximum voltage generated between the electrode layers is calculated according to the equation

$$U_{f,\,max} = U_C - i_C R_{Eff}.$$

8.  Process in accordance with claims 2 and 7, **characterised in that** the maximum voltage $U_{c,max}$, which may be safely applied to the cell contacts (A, B) is calculated from the temperature-dependent safe redox limit $U_{EC}$, the cell current $i_C$, and the effective resistance $R_{Eff}$ of the electrochromic cell.

9. Process in accordance with claim 8, **characterised in that** the maximum voltage which may be safely applied to the cell contacts (A, B) is calculated from the temperature-dependent safe redox limit $U_{EC}$, the cell current $i_C$ and the effective resistance $R_{Eff}$ of the electrochromic cell, according to the equation

$$U_{C, max} = U_{EC} + i_C R_{Eff}.$$

10. Process in accordance with claim 1, where the applied cell voltage $U_c$ is modified in a stepwise fashion, increased for coloration, decreased for bleaching, as long as the cell current remains below the predetermined current limit $i_{max}$, until a maximum cell contact voltage limit $U_{C,max}$ is reached.

11. Process in accordance with claim 10, where the applied cell voltage is modified in a stepwise fashion until the maximum cell contact voltage limit $U_{C,max}$ is reached, according to the equation

$$U_{C, f} = U_{C, i} + U_{step},$$

with voltage step size $U_{step}$ being positive for coloration, and negative for bleaching, and with final and initial voltages $U_{Cf}$ and $U_{C,i}$.

12. Process in accordance with claim 10, where the applied cell voltage is modified in a stepwise fashion after the maximum cell contact voltage limit $U_{C,max}$ is reached, according to the equation

$$U_{C, f} = U_{C, i} - U_{step},$$

with voltage step size $U_{step}$ being positive for coloration, and negative for bleaching, and with final and initial voltages $U_{C,f}$ and $U_{C,i}$.

13. Process in accordance with claims 1 or 2, wherein at a given temperature, T, of the electrochromic cell the bleaching process, and therefore the charge extraction, is extended for a specific period of time, $\Delta t_{Bl}$, which is calculated according to the equation

$$\Delta t_{Bl} = (T_{lim} - T) \times Z,$$

where $\Delta t_{Bl}$ is the additional bleaching time, $T_{lim}$ is a limiting temperature of the electrochromic cell below which the bleaching process is extended, if $T_{lim} > T$, and Z is a factor designating how long the bleaching process should be extended for every degree below the limiting temperature.

14. Process in accordance with any of the preceding claims, **characterised in that** the contact voltage applied to the cell contacts (A, B) is varied in steps of 10 - 100 mV.

15. Process in accordance with claim 1, where both layers in which ions may be reversibly inserted are electrochromic.

16. Process in accordance with any of claims 1 to 14, where the first and the second electrode layer are optically transparent.

17. Apparatus, comprising:

an electrochromic cell, and
a voltage source, arranged to apply a voltage $U_c$ to contacts (A, B) of said electrochromic cell,
wherein the electrochromic cell comprises at least the following components:

a first electrode layer (2) provided with a first electrical cell contact (A) and a second electrode layer (6) provided with a second electrical cell contact (B);
a first and a second layer (3, 5), in which ions may be reversibly inserted, the first layer (3) being coated on the first electrode layer (2), and the second layer (5) being coated on the second electrode layer (6); and
an ion-conducting layer (4) that separates the first and the second layer (3, 5) in which ions may be reversibly inserted;
where at least the first layer (3), in which ions may be reversibly inserted, is electrochromic; and
where the first and the second layer (3, 5), in which ions may be reversibly inserted, are counter electrodes to each other;

wherein the apparatus further comprises
means for measuring the applied contact voltage $U_c$,
a controller connected to the means for measuring the applied contact voltage and adapted to analyse the measured values;
an ammeter, adapted to provide for the cell current $i_c$ to be continuously measured and to send the measured values of the cell current to the controller on a cyclic basis;
a temperature sensor, adapted to provide for temperature measurement of the electrochromic cell, preferably incorporated into a structure of the electrochromic cell, such that
the controller is adapted to calculate the magnitude of the electrical voltage to be applied to the cell contacts (A, B) based on values of temperature, electrochromic voltage limits and cell current, wherein the controller is adapted to increase the applied voltage as a function of current, such that the voltage $U_f$ generated between the electrode layers (2, 6) is kept within predetermined temperature-dependent safe redox limits, so that the cell current is limited to predetermined temperature-dependent limits, the apparatus being **characterised in that** the controller is adapted to increase the applied voltage in a stepwise fashion only if the cell current is less than a maximum cell current $i_{max}$, determined according to

$$i_{max} = j_{max} \times Area + (T - T_0) \times F,$$

where $j_{max}$ is a predetermined maximum current density, *Area* is the active cell area, T is the temperature of the electrochromic element, and $T_0$ is a reference temperature, thereby the factor F allowing for modification of the current according to temperature, thereby allowing modification of switching speed with respect to temperature.

18. Apparatus in accordance with claim 17, **characterised in that** the controller furthermore comprises a microprocessor and is adapted to perform calculations according to a switching algorithm, thereby controlling the entire switching process based on the use of the algorithm.


## Patentansprüche

1. Verfahren zum Schalten einer elektrochromen Zelle, welche zumindest die folgenden Komponenten aufweist:

eine erste Elektrodenschicht (2), welche einen ersten elektrischen Zellkontakt (A) aufweist, sowie eine zweite Elektrodenschicht (6), welche einen zweiten elektrischen Zellkontakt (B) aufweist;
eine erste und eine zweite Schicht (3, 5), in welche Ionen reversibel eingebracht werden können, wobei die erste Schicht (3) auf die erste Elektrodenschicht (2) und die zweite Schicht (5) auf die zweite Elektrodenschicht (6) beschichtet ist; und
eine Ionen leitende Schicht (4), welche die erste und die zweite Schicht (3, 5), in welche Ionen reversibel eingebracht werden können, voneinander trennt;
wobei zumindest die erste Schicht (3), in welche Ionen reversibel eingebracht werden können, elektrochrom ist; und
wobei die erste und die zweite Schicht (3, 5), in welche Ionen reversibel eingebracht werden können, Gegenelektroden zueinander sind;
wobei das Verfahren die Schritte aufweist:

Kontinuierliches Messen des Stromes $i_C$, welcher durch die Zelle fließt, wenn eine Spannung an die Elektrodenschichten (2, 6) angelegt ist; und

Anlegen einer Spannung $U_C$ an die Kontakte (A, B) und Variieren der angelegten Spannung als eine Funktion des Stromes, so dass die zwischen den Elektrodenschichten (2, 6) erzeugte Spannung $U_f$ innerhalb vorbestimmter temperaturabhängiger sicherer Redoxgrenzen gehalten wird, so dass der Zellenstrom auf vorbestimmte temperaturabhängige Grenzen beschränkt wird,

**dadurch gekennzeichnet, dass** die angelegte Spannung nur dann schrittweise erhöht wird, wenn der Zellenstrom geringer als ein maximaler Zellenstrom $i_{max}$ ist, ermittelt über

$$i_{max} = j_{max} \times Area + (T - T_0) \times F,$$

wobei $j_{max}$ eine vorbestimmte maximale Stromdichte ist, $Area$ der aktive Zellenbereich ist, T die Temperatur des elektrochromen Elementes ist, und $T_0$ eine Referenztemperatur ist, wobei der Faktor F eine Anpassung des Stroms entsprechend der Temperatur ermöglicht, was eine Anpassung der Schaltgeschwindigkeit in Abhängigkeit von der Temperatur erlaubt.

2. Verfahren nach Anspruch 1, **dadurch gekennzeichnet, dass** die Temperaturabhängigkeit der sicheren Redoxgrenzen $U_{EC}$ gemäß der Gleichung:

$$U_{EC} = a + bT$$

berechnet wird, wobei T die Temperatur des elektrochromen Elementes und a sowie b sich auf den Aufbau der elektrochromen Vorrichtung beziehende Konstanten sind.

3. Verfahren nach Anspruch 1, **dadurch gekennzeichnet, dass** die maximale Stromdichte $j_{max}$ aus der benötigten Schaltzeit gemäß der Gleichung

$$J_{max} = \left( \frac{Qmax}{Time} \right)$$

berechnet wird, wobei $Q_{max}$ die maximale Ladungsdichte ist, welche sich auf den vollständig eingefärbten Zustand bezieht, und wobei $Time$ die benötigte Schaltzeit ist.

4. Verfahren nach Anspruch 1, **dadurch gekennzeichnet, dass** der effektive Widerstand $R_{Eff}$ der elektrochromen Zelle aus den Zellabmessungen und zumindest einer Materialkonstante vor dem Beginn des Schaltvorgangs berechnet wird.

5. Verfahren nach Anspruch 4, **dadurch gekennzeichnet, dass** der effektive Widerstand $R_{Eff}$ der elektrochromen Zelle aus der Zellbreite (w) berechnet wird, wobei sich die Breite (w) auf einen Abstand zwischen Elektrodenkontaktstreifen der Zellkontakte (A, B) bezieht, aus der Höhe (h), wobei die Höhe (h) einer Länge der kontaktierten Kanten der Zellkontakte (A, B) entspricht, und aus zumindest einer Materialkonstante (k) gemäß der Gleichung

$$R_{Eff} = \left( \frac{w}{h_i} \right) \times k$$

6. Verfahren nach Anspruch 5, **dadurch gekennzeichnet, dass** die Maximalspannung $U_{f,max}$, die zwischen den Elektrodenschichten erzeugt wird aus der angelegten Kontaktspannung $U_C$, dem Zellenstrom $i_C$ sowie dem effektiven Widerstand $R_{Eff}$ der elektrochromen Zelle berechnet wird.

7. Verfahren nach Anspruch 6, **dadurch gekennzeichnet, dass** die zwischen den Elektrodenschichten erzeugte Maximalspannung gemäß der Gleichung

$$U_{f,max} = U_C - i_C R_{Eff}$$

berechnet wird.

8. Verfahren nach den Ansprüchen 2 und 7, **dadurch gekennzeichnet, dass** die Maximalspannung $U_{C,max}$, welche sicher an die Zellkontakte (A, B) angelegt werden kann, aus der temperaturabhängigen sicheren Redoxgrenze $U_{EC}$, dem Zellenstrom $i_C$ sowie dem effektiven Widerstand $R_{Eff}$ der elektrochromen Zelle berechnet wird.

9. Verfahren nach Anspruch 8, **dadurch gekennzeichnet, dass** die maximale Spannung, welche an die Zellkontakte (A, B) sicher angelegt werden kann, aus der temperaturabhängigen sicheren Redoxgrenze $U_{EC}$, dem Zellenstrom $i_C$ sowie dem effektiven Widerstand $R_{Eff}$ der elektrochromen Zelle gemäß der Gleichung

$$U_{C,\,max} = U_{EC} + i_C R_{Eff}$$

berechnet wird.

10. Verfahren nach Anspruch 1, bei dem die angelegte Zellspannung $U_C$ schrittweise verändert wird, erhöht für die Einfärbung, verringert für die Entfärbung, solange, bis der Zellenstrom unterhalb der vorbestimmten Stromgrenze $i_{max}$ verbleibt, und solange, bis eine maximalen Kontaktspannungsgrenze $U_{C,\,max}$ erreicht wird.

11. Verfahren nach Anspruch 10, bei dem die angelegte Zellspannung schrittweise verändert wird, bis die maximale Zellkontaktspannungsgrenze $U_{C,max}$ erreicht wird, gemäß der Gleichung

$$U_{C,f} = U_{C,i} + U_{step,}$$

wobei die Spannungsschrittweite $U_{step}$ für die Einfärbung positive und für die Entfärbung negativ ist, und wobei die End- und die Anfangsspannungen $U_{C,f}$ und $U_{Ci}$ sind.

12. Verfahren nach Anspruch 10, bei dem die angelegte Zellenspannung schrittweise verändert wird, nachdem die maximale Zellenkontaktspannungsgrenze $U_{C,max}$ erreicht wird, gemäß der Gleichung

$$U_{C,f} = U_{C,i} - U_{step,}$$

wobei die Spannungsschrittweite $U_{step}$ positive für die Einfärbung und negativ für die Entfärbung ist, und wobei die End- und die Anfangsspannungen $U_{c,f}$ und $U_{C,i}$ sind.

**13.** Verfahren gemäß Anspruch 1 oder 2, bei dem bei einer gegebenen Temperatur T der elektrochromen Zelle der Entfärbungsvorgang, und damit die Entladung, für eine bestimmte Zeitdauer $\Delta t_{Bl}$ verlängert wird, welche gemäß der Gleichung

$$\Delta t_{Bl} = (T_{lim} - T) \times Z$$

berechnet wird, wobei $\Delta t_{Bl}$ die zusätzliche Entfärbungszeit ist, $T_{lim}$ eine Grenztemperatur der elektrochromen Zelle ist, unterhalb welcher der Entfärbungsvorgang verlängert wird, wobei $T_{lim} > T$ ist, und wobei Z ein Faktor ist, der angibt, wie lange der Entfärbungsvorgang für jedes Grad unterhalb der Grenztemperatur verlängert werden soll.

**14.** Verfahren nach einem der vorangegangenen Ansprüche, **dadurch gekennzeichnet, dass** die an die Zellkontakte (A, B) angelegte Kontaktspannung in Schritten von 10 - 100 mV variiert wird.

**15.** Verfahren nach Anspruch 1, bei dem beide Schichten, in welche Ionen reversibel eingebracht werden können, elektrochrom sind.

**16.** Verfahren nach einem der Ansprüche 1 bis 14, bei dem die erste und die zweite Elektrodenschicht optisch transparent sind.

**17.** Vorrichtung, die aufweist:

eine eletrochrome Zelle, und
eine Spannungsquelle, die darauf ausgelegt ist, eine Spannung $U_C$ an Kontakte (A, B) der elektrochromen Zelle anzulegen, wobei die eletrochrome Zelle zumindest die folgenden Komponenten aufweist:

eine erste Elektrodenschicht (2), welche einen ersten elektrischen Zellenkontakt (A) aufweist, sowie eine zweite Elektrodenschicht (6), welche einen zweiten elektrischen Zellenkontakt (B) aufweist;
eine erste und eine zweite Schicht (3, 5), in welche Ionen reversibel eingebracht werden können, wobei die erste Schicht (3) auf die erste Elektrodenschicht (2) und die zweite Schicht (5) auf die zweite Elektrodenschicht (6) beschichtet ist;
eine Ionen leitende Schicht (4), welche die erste und die zweite Schicht (3, 5), in welche Ionen reversibel eingebracht werden können, voneinander trennt;
wobei zumindest die erste Schicht (3), in welche Ionen reversibel eingebracht werden können, elektrochrom ist; und
wobei die erste und die zweite Schicht (3, 5), in welche Ionen reversibel eingebracht werden können, Gegenelektroden zueinander sind;

wobei die Vorrichtung weiterhin aufweist:

Mittel für die Bestimmung der angelegten Kontaktspannung $U_C$;
eine Steuerung, welche mit den Mitteln für die Messung der angelegten Kontaktspannung verbunden und darauf ausgelegt ist, die gemessenen Werte zu analysieren;
ein Amperemeter, das darauf ausgelegt ist, eine kontinuierliche Messung des Zellenstromes $i_C$ bereitzustellen und die gemessenen Werte des Zellstromes zyklisch an die Steuerung zu senden;
einen Temperatursensor, der darauf ausgelegt ist, eine Temperaturmessung der elektrochromen Zelle bereitzustellen, wobei der Temperatursensor vorzugsweise in eine Struktur der elektrochromen Zelle integriert ist, so dass
die Steuerung darauf ausgelegt ist, die Größenordnung der elektrischen Spannung, welche an die Zellkontakte (A, B) angelegt werden soll, ausgehend von Temperaturwerten, elektrochromen Spannungsgrenzen und dem Zellstrom zu berechnen, wobei die Steuerung darauf ausgelegt ist, die angelegte Spannung als eine Funktion des Stromes zu erhöhen, so dass die Spannung $U_f$, die zwischen den Elektrodenschichten (2, 6) erzeugt wird, innerhalb vorbestimmter temperaturabhängiger sicherer Redoxgrenzen gehalten wird, so dass der Zellstrom auf vorbestimmte temperaturabhängige Grenzen beschränkt ist, wobei die Vorrichtung **dadurch gekennzeichnet ist, dass** die Steuerung darauf ausgelegt ist, die angelegte Spannung nur dann schrittweise zu erhöhen, wenn der Zellstrom kleiner als ein maximaler Zellstrom $i_{max}$ ist, bestimmt gemäß

$$i_{max} = j_{max} \times Area + (T - T_0) \times F,$$

wobei $j_{max}$ eine vorbestimmte maximale Stromdichte ist, Area der aktive Zellenbereich ist, T die Temperatur des elektrochromen Elementes ist, und $T_0$ eine Referenztemperatur ist, wobei der Faktor F eine Anpassung des Stromes entsprechend der Temperatur erlaubt, wodurch die Anpassung der Schaltgeschwindigkeit in Abhängigkeit von der Temperatur ermöglicht wird.

18. Vorrichtung nach Anspruch 17, **dadurch gekennzeichnet, dass** die Steuerung weiterhin einen Mikroprozessor aufweist, und darauf ausgelegt ist, Berechnungen entsprechend einem Schaltalgorithmus durchzuführen, wobei der gesamte Schaltvorgang auf Grundlage der Verwendung des Algorithmus gesteuert ist.

## Revendications

1. Processus pour commuter une cellule électrochrome comprenant au moins les composants suivants :

une première couche d'électrode (2) pourvue d'un premier contact de cellule électrique (A) et une deuxième couche d'électrode (6) pourvue d'un deuxième contact de cellule électrique (B) ;
des première et deuxième couches (3, 5) dans lesquelles des ions peuvent être insérés de manière réversible, la première couche (3) étant déposée sur la première couche d'électrode (2), et la deuxième couche (5) étant déposée sur la deuxième couche d'électrode (6) ; et
une couche conductrice d'ions (4) qui sépare les première et deuxième couches (3, 5) dans lesquelles des ions peuvent être insérés de manière réversible ;
dans lequel au moins la première couche (3), dans laquelle des ions peuvent être insérés de manière réversible, est électrochrome ; et
dans lequel les première et deuxième couches (3, 5), dans lesquelles des ions peuvent être insérés de manière réversible, sont des contre-électrodes l'une par rapport à l'autre ;
le processus comprenant les étapes :

de mesure continue du courant $i_C$ circulant à travers la cellule si une tension est appliquée aux couches d'électrode (2, 6) ; et
d'application d'une tension Uc aux contacts (A, B) et de variation de la tension appliquée en fonction du courant, de sorte que la tension $U_f$ générée entre les couches d'électrode (2, 6) soit maintenue dans des limites d'oxydo-réduction de sécurité fonction de la température prédéterminées, de sorte que le courant de cellule soit limité à des limites fonction de la température prédéterminées,
**caractérisé en ce que**
la tension appliquée n'est augmentée par pas que si le courant de cellule est inférieur à un courant de cellule maximum $i_{max}$ déterminé conformément à

$$i_{max} = j_{max} \times Area + (T - T_0) \times F,$$

où $j_{max}$ est une densité de courant maximum prédéterminée, Area est l'aire de la cellule active, T est la température de l'élément électrochrome et To est une température de référence, le facteur F permettant de ce fait la modification du courant en fonction de la température, permettant de ce fait la modification de la vitesse de commutation en relation avec la température.

2. Processus selon la revendication 1, **caractérisé en ce que** la dépendance de la température des limites d'oxydo-réduction de sécurité $U_{EC}$ est calculée conformément à l'équation :

$$U_{EC} = a + bT,$$

où T est la température de l'élément électrochrome et *a* et *b* sont des constantes associées à la conception du dispositif électrochrome.

3. Processus selon la revendication 1, **caractérisé en ce que** la densité de courant maximum $j_{max}$ est calculée à partir du temps de commutation souhaité, conformément à l'équation

$$j_{max} = \left( \frac{Q_{max}}{Time} \right),$$

où $Q_{max}$ est la densité de charge maximum correspondant à l'état complètement coloré et *Time* est le temps de commutation souhaité.

4. Processus selon la revendication 1, **caractérisé en ce que** la résistance effective $R_{Eff}$ de la cellule électrochrome est calculée à partir des dimensions de la cellule et d'au moins une constante de matériau avant le début du processus de commutation.

5. Processus selon la revendication 4, **caractérisé en ce que** la résistance effective $R_{Eff}$ de la cellule électrochrome est calculée à partir de la largeur (w) de la cellule, où la largeur (w) fait référence à la séparation entre les bandes de contact d'électrode des contacts de cellule (A, B), de la hauteur (h), où la hauteur (h) correspond à une longueur des bords de contact des contacts de cellule (A, B), et d'au moins une constante de matériau (k), conformément à l'équation

$$R_{Eff} = \left( \frac{w}{h} \right) \times k.$$

6. Processus selon la revendication 5, **caractérisé en ce que** la tension maximum $U_{f,max}$ générée entre les couches d'électrode est calculée à partir de la tension de contact $U_C$ appliquée, du courant de cellule ic et de la résistance effective $R_{Eff}$ de la cellule électrochrome.

7. Processus selon la revendication 6, **caractérisé en ce que** la tension maximum générée entre les couches d'électrode est calculée conformément à l'équation

$$U_{f,max} = U_C - i_C R_{eff}.$$

8. Processus selon les revendications 2 et 7, **caractérisé en ce que** la tension maximum $U_{C,max}$ qui peut être appliquée en toute sécurité aux contacts de cellule (A, B) est calculée à partir de la limite d'oxydoréduction de sécurité fonction de la température $U_{EC}$, du courant de cellule $i_C$ et de la résistance effective $R_{Eff}$ de la cellule électrochrome.

9. Processus selon la revendication 8, **caractérisé en ce que** la tension maximum qui peut être appliquée en toute sécurité aux contacts de cellule (A, B) est calculée à partir de la limite d'oxydoréduction de sécurité fonction de la température $U_{EC}$, du courant de cellule $i_C$ et de la résistance effective $R_{Eff}$ de la cellule électrochrome, conformément à l'équation

$$U_{C,max} = U_{EC} - i_C R_{eff}.$$

**10.** Processus selon la revendication 1, dans lequel la tension de cellule Uc appliquée est modifiée par pas, augmentée pour une coloration, diminuée pour une décoloration, tant que le courant de cellule reste au-dessous de la limite de courant $i_{max}$ prédéterminée, jusqu'à ce qu'une limite de tension de contact de cellule maximum $U_{C,max}$ soit atteinte.

**11.** Processus selon la revendication 10, dans lequel la tension de cellule appliquée est modifiée par pas jusqu'à ce que la limite de tension de contact de cellule maximum $U_{C,max}$ soit atteinte, conformément à l'équation

$$U_{C,f} = U_{C,i} + U_{step},$$

avec une taille de pas de tension $U_{step}$ positive pour une coloration et négative pour une décoloration, et des tensions finale et initiale $U_{Cf}$ et $U_{Ci}$.

**12.** Processus selon la revendication 10, dans lequel la tension de cellule appliquée est modifiée par pas après que la limite de tension de contact de cellule maximum $U_{C,max}$ a été atteinte, conformément à l'équation

$$U_{C,f} = U_{C,i} - U_{step},$$

avec une taille de pas de tension $U_{step}$ positive pour une coloration et négative pour une décoloration, et des tensions finale et initiale $U_{Cf}$ et $U_{Ci}$.

**13.** Processus selon la revendication 1 ou 2, dans lequel, à une température donnée, T, de la cellule électrochrome, le processus de décoloration, et par conséquent l'extraction de charge, est prolongé pendant une période de temps spécifique, $\Delta t_{Bl}$, qui est calculée conformément à l'équation

$$\Delta t_{Bl} = (T_{lim} - T) \times Z,$$

où $\Delta t_{Bl}$ est le temps de décoloration supplémentaire, $T_{lim}$ est une température limite de la cellule électrochrome au-dessous de laquelle le processus de décoloration est prolongé, si $T_{lim} > T$, et Z est un facteur indiquant de combien de temps le processus de décoloration devrait être prolongé pour chaque degré au-dessous de la température limite.

**14.** Processus selon l'une quelconque des revendications précédentes, **caractérisé en ce que** la tension de contact appliquée aux contacts de cellule (A, B) est modifiée par pas de 10 à 100 mV.

**15.** Processus selon la revendication 1, dans lequel les deux couches dans lesquelles des ions peuvent être insérés de manière réversible sont électrochromes.

**16.** Processus selon l'une quelconque des revendications 1 à 14, dans lequel les première et deuxième couches d'électrode sont optiquement transparentes.

**17.** Appareil comprenant :

une cellule électrochrome, et
une source de tension, agencée pour appliquer une tension Uc aux contacts (A, B) de ladite cellule électrochrome, dans lequel la cellule électrochrome comprend au moins les composants suivants :

une première couche d'électrode (2) pourvue d'un premier contact de cellule électrique (A) et une deuxième couche d'électrode (6) pourvue d'un deuxième contact de cellule électrique (B) ;
des première et deuxième couches (3, 5), dans lesquelles des ions peuvent être insérés de manière réversible, la première couche (3) étant déposée sur la première couche d'électrode (2), et la deuxième couche (5) étant déposée sur la deuxième couche d'électrode (6) ; et

une couche conductrice d'ions (4) qui sépare les première et deuxième couches (3, 5) dans lesquelles des ions peuvent être insérés de manière réversible ;

dans lequel au moins la première couche (3), dans laquelle des ions peuvent être insérés de manière réversible, est électrochrome ; et

dans lequel les première et deuxième couches (3, 5), dans lesquelles des ions peuvent être insérés de manière réversible, sont des contre-électrodes l'une par rapport à l'autre ;

dans lequel l'appareil comprend en outre

des moyens pour mesurer la tension de contact Uc appliquée,

un contrôleur connecté aux moyens pour mesurer la tension de contact appliquée et conçu pour analyser les valeurs mesurées ;

un ampèremètre, conçu pour fournir le courant de cellule ic à mesurer en continu et pour envoyer les valeurs mesurées du courant de cellule au contrôleur sur une base cyclique ;

un capteur de température, conçu pour fournir une mesure de température de la cellule électrochrome, incorporé de préférence dans une structure de la cellule électrochrome, de sorte que

le contrôleur est conçu pour calculer l'amplitude de la tension électrique à appliquer aux contacts de cellule (A, B) sur la base des valeurs de température, des limites de tension électrochromes et du courant de cellule, dans lequel le contrôleur est conçu pour augmenter la tension appliquée en fonction du courant, de sorte que la tension $U_f$ générée entre les couches d'électrode (2, 6) soit maintenue dans des limites d'oxydo-réduction de sécurité fonction de la température prédéterminée, de sorte que le courant de cellule soit limité à des limites fonction de la température prédéterminée, l'appareil étant **caractérisé en ce que** le contrôleur est conçu pour n'augmenter la tension appliquée par pas que si le courant de cellule est inférieur à un courant de cellule maximum $i_{max}$, déterminé conformément à

$$i_{max} = j_{max} \times Area + (T - T_0) \times F,$$

où $j_{max}$ est une densité de courant maximum prédéterminée, Area est l'aire de cellule active, T est la température de l'élément électrochrome, et $T_0$ est une température de référence, le facteur F permettant de ce fait la modification du courant en fonction de la température, permettant de ce fait la modification de la vitesse de commutation en relation avec la température.

18. Appareil selon la revendication 17, **caractérisé en ce que** le contrôleur comprend en outre un microprocesseur et est conçu pour effectuer des calculs conformément à un algorithme de commutation, commandant de ce fait le processus de commutation entier sur la base de l'utilisation de l'algorithme.

Fig. 1

Fig. 2

**1** • T%-setpoint changed
• $Q_{set}$ calculated
• $U_C$ = ocp applied

**2** • $U_C$, $i_C$ measured
• $Q_C$ calculated
• $U_{C,max} = U_{EC} - i_C R$

**3** *Final charge reached?* — **T**

**F**

**4** *Current < limit $i_{con}$?* — **T**

**F**

**5** *Max. potential applied?* — **T**

**F**

Increase applied potential

**6** *Current < limit $i_{an}$?* — **T**

**F**

**7** *Max. potential exceeded?* — **T**

**F**

Decrease applied potential

**End**

Fig. 3

24

Fig. 4

Fig. 5

**EP 2 161 615 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9837453 A
- EP 0475847 B1
- EP 0718667 A1
- US 7277215 B2
- EP 1517293 A1
- WO 0067070 A